# EUROPEAN PATENT APPLICATION

(11) **EP 2 367 108 A2**
(43) Date of publication of application: **21.09.2011**
(21) Application number: 11156915.8
(22) Date of filing: 04.03.2011
(51) Int. Cl.: G06F 9/46, G06F 11/34

(54) **Portable electronic device, communication device, and command processing method**

(30) Priority: 18.03.2010 JP 2010063322
(71) Applicant: Kabushiki Kaisha Toshiba, Minato-ku, Tokyo 105-8001 (JP)
(72) Inventor: Takahashi, Atsushi, Tokyo Tokyo 105-8001 (JP)
(74) Representative: Horn Kleimann Waitzhofer

(57) **Abstract**

According to one embodiment, a portable electronic device includes a communication unit (21) and a command processor (22). The command processor controls the communication unit to send a first response in response to normal execution of the plurality of processes. The command processor controls the communication unit to send a second response in response to occurrence of a first event, for which it is specified that a process is to be aborted upon occurrence thereof, in one process of the plurality of processes. The command processor controls the communication unit to send a third response in response to occurrence of a second event, for which it is specified that a process is not to be aborted upon occurrence thereof, in at least one process of the plurality of processes.

## Description

### FIELD

Embodiments described herein relate generally to a portable electronic device, communication device, and command processing method.

### BACKGROUND

In recent years, smartcard (of the contact and contactless types) with high security have become remarkably common. A smartcard has a nonvolatile memory which can hold data even after power-off, a communication interface which can communicate with a reader/writer, a control element such as a CPU which executes various operations, a ROM which stores, for example, operation programs of the CPU, and a RAM which temporarily stores data. Note that the smartcard incorporates an integrated circuit (IC) module having, for example, a nonvolatile memory and control element such as a CPU, and is called, for example, a portable electronic device.

Smartcards are used in various fields not only as credit cards, commuter passes, and for settlement of other commercial transactions, but also as ID cards such as employee ID cards, member cards, and insurance cards. This is because the smartcards can implement various functions since they include an IC having a CPU, ROM, RAM, and nonvolatile memory, and can be greatly improved in terms of security since they are hard to counterfeit, compared to conventional magnetic cards.

The smartcard operates based on a command transmitted from a reader/writer. For examples, when the smartcard receives a command transmitted from the reader/writer, it executes processing based on the received command, and returns a response to the reader/writer .

### BRIEF DESCRIPTION OF THE DRAWINGS

FIG. 1 is a schematic block diagram showing an example of the arrangement of a smartcard system (an IC card system) according to an embodiment;
FIG. 2 is a schematic block diagram showing an example of the arrangement of a card reader/writer according to the embodiment;
FIG. 3 is a schematic block diagram showing an example of the arrangement of a smartcard (an IC card) According to the embodiment;
FIG. 4 is a chart showing an example of second command processing;
FIG. 5 is a chart showing an example off first command processing;
Fig. 6 is a flowchart showing an example of a case in which the second command processing is applied to execution of an ENVELOPE command;
FIG. 7 is a flowchart showing an example of a case in which the first command processing is applied to execution of an ENVELOPE command;
FIG. 8 is a view showing an example of a Secured Command APDU a;
FIG. 9 is a view showing an example of a Secured Command APDU b;
FIG. 10 is a view showing an example of a Secured Command APDU c;
FIG. 11 is a view showing an example of SWs corresponding to executions of a Command APDU a-1 and Command APDUS a-2 ;
FIG. 12 is a view showing an example of Sws corresponding to executions of a Command APDU b-1, Command APDU b-2, and Command. APDU b-3;
FIG. 13 is a. view showing an example, of SWs corresponding to executions of a Command APDU c-1, Command APDU c-2, Command APDU c-(n-1) and Command APDU c-n;
FIG. 14 is a view showing an example of a response corresponding to the Secured Command APDU a;
FIG. 15 is a view showing an example of a response corresponding to the Secured Command APDU b;
FIG. 16 is a view showing an example of a response corresponding to the Secured Command APDU c;
FIG. 17 is a view showing an example of the format of the ENVELOPE command;.
FIG. 18 is a view showing an example of the format of an SMS-TPDU TLV;
FIG, 19 is a view showing an SMS connection example;
FIG. 20 is a view showing a connection example of Secured. Data A.;
FIG. 21 is a view showing a connection example of Secured_Data_B
FIG. 22 is a view showing a connection example of Secured_Data_C;
FIG. 23 is a view showing an example of a Secured Command APDU stored in the Secured_Data_A;
FIG. 24 is a view showing an example of the execution result of the Secured Command APDUS shown in FIG. 23; and
FIG. 25 is a view showing an example of a response of a smartcard corresponding to execution of the Secured Command APDU shown in FIG. 23.

### DETAILED DESCRIPTION

In general, According to one embodiment, a portable electronic device includes a communication unit and a command processor. The command processor controls the communication unit to send a first response in response to normal execution of the plurality of processes. The command processor control the communication unit to send a second response in response to occurrence of a first event, for which it is specified that a process is to be aborted upon occurrence thereof, in one process of the plurality of processes. The command processor controls the communication unit to send a third response in response to occurrence of a second event, for which it is specified that a process is not to be aborted upon occurrence thereof, in at least one process of the plurality of processes,

An embodiment will be described hereinafter with reference to the accompanying drawings

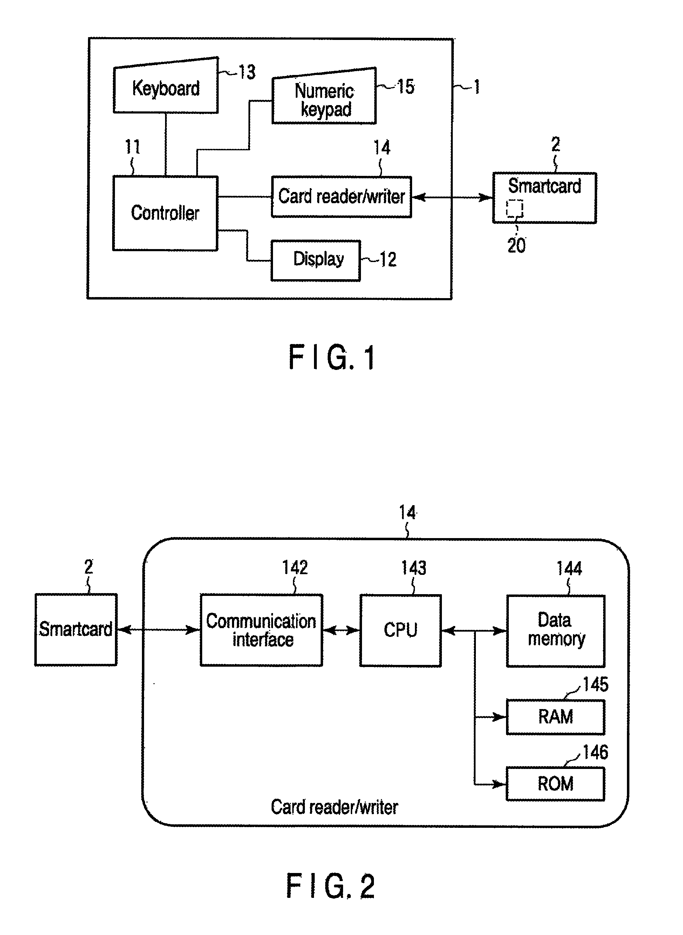

FIG. 1 is a schematic block diagram showing the arrangement of a smartcard system (an IC card system) according to an embodiment. As shown in FIG. 1, the smartcard system is configured by a terminal 1 (communication device) and smartcard 2 (portable electronic device) . The terminal 1 include a controller 11, display 12, keyboard 13, card reader/writer 14, and numeric keypad 15. The terminal 1 is configured to communicate with the smartcard 2 (an IC card). The terminal 1 sends data such as a command to the smartcard 2, and receives data such as a response from the smartcard 2.

The controller 11 can selectively execute, for example, a plurality of communication methods and a plurality of application. The display 12 displays; for example, a communication result and authentication result with the smartcard 2. The keyboard 13 is used to input, for example, characters and numerical values to the controller 11. The numeric keypad 15 is used to input, for example, a PIN to the controller 11. The card reader/writer 14 communicates with the smartcard 2.

Note that the smartcard 2 may be any of a contact type card, contactless type card, and combined card which supports both the contactless and contact types .

FIG. 2 is a schematic block diagram showing the arrangement of the card reader/writer 14 according to the embodiment. As shown in FIG. 2, the card reader/writer 14 includes a communication interface 142, CPU 143, data memory (nonvolatile memory) 144, RAM 145, and ROM 146. The CPU 143 serves as, for example, a communication controller. The CPU 143 controls to send a command to the smartcard 2, and to detect a response from the smartcard 2. Furthermore, the CPU 143 controls to send another command to the smartcard 2 based on the response from the smartcard 2.

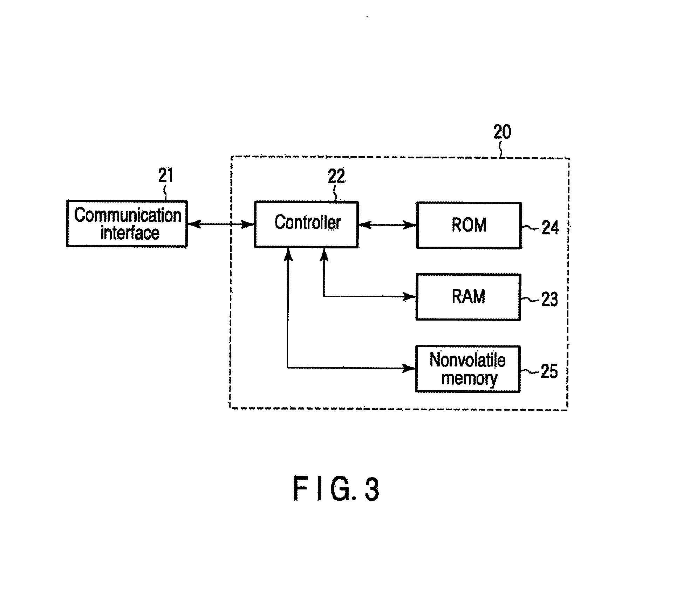

FIG. 3 is a schematic block diagram, showing the arrangement of the smartcard according to the embodiment. As shown in FIG. 3, the smartcard 2 is, for example, a plastic card, and includes an IC chip 20 (IC module) and communication interface 21. The IC chip 20 includes a controller 22 configured by a control element:, nonvolatile memory (EEPROM, FRAM, flash, etc.) 25, RAM 23, and ROM 24. For example, the IC chip 20 and communication interface 21 are integrated to form an IC module, which is embedded in a smartcard main body (in a plastic card). Note that the aforementioned smartcard 2 will be explained as an example of a portable electronic device, but the present invention is not limited to such specific device. The portable electronic device may, for example, be a SIM-shaped smartcard.

The smartcard 2 is configured by, for example, a common unit and application unit. The common unit is configured by the IC chip 20 and communication interface 21., and the application unit is configured by the IC chip 20. The common unit of the controller 22 operates based on, four example, a smartcard program stored in the ROM. 24. The common unit of the controller 22 controls to receive, for example, a command from the terminal 1, interpret the: deceived command, and controls to send, for example, a response to the terminal 1. The application unit of the controller 22 serves as a command processor, and executes the interpreted command. The roles of the common unit and application unit will be described in detail later.

The RAM 23 serves as a working memory, and stores, for example, the execution result, corresponding to the execution of a command. When a plurality of commands are executed, the RAM 23 stores, for example, the execution results corresponding to executions of these plurality of commands. The nonvolatile memory 25 stores (backs up) , for example, the execution results stored in the RAM. The ROM 24 holds the smartcard program to be executed by the controller 22.

First command processing by the aforementioned terminal 1 and smartcard 2 will be described below. The .first command processing to be described below alLows to judge detailed command processing statues.

For example, the terminal 1 sends a Secured Command APDU (for example, a main command) which stores a plurality of. Command APDUs (for example, sub-commands) to the smartcard 2. In response to this, the smartcard 2 (common unit) receives the Secured Command APDU from the terminal 1, and the smartcard (application unit) executes the plurality of Command APDUs stored in this Secured Command APDU. That is, the smartcard 2 (application unit) executes a plurality of processes corresponding to the plurality of Command APDUs in turn Also, the smartcard. 2 (common unit) stores a plurality of execution statuses corresponding to executions of the plurality of processes.

When these plurality of processes can be normally executed, the smart card 2 (common unit) sends a first response (SW 61xx to be described later) to the terminal 1. Furthermore, the smartcard 2 (common unit) sends an execution status response including the number of executed commands and an execution status of a last command which is executed last of the plurality of commands (a last SW to be described later) .

When a first event (error), for which it is specified that a process is to be aborted upon its occurrence, has occurred In one of these plurality of processes, the smartcard 2 (common unit) aborts the process, and sends a second, response (SW = 6200 to be described later) to the terminal 1. Furthermore, the smartcard 2 (common unit) sends an execution status response including the number of executed commands, and an execution status of a last command which is executed last of the plurality of commands (a last SW to be described later) .

In response to occurrence of a second event (warning), for which it is specified that a process is not to be aborted, upon its occurrence, in at least one of these plurality of processes, the smartcard 2 (common unit) sends a third response (SW = yyxx to be described later) to the terminal 1 without aborting the process. Furthermore, the smartcard 2 (common unit) sends an execution status response including the number of executed commands, and an execution status of a last command which is executed last of the plurality of commands (a last SW to be described later).

When the terminal 1 receives the third response of the first, second, and third responses, it can detect that the second event (warning) has occurred in at least one of the plurality of processes. In response to this, the terminal 1 sends an execution status request command (a dedicated Command APDU) that requests an execution status of at least one of the plurality of processes to the ID card 2. For example, when the terminal 1 registers a predetermined command which readily causes the second event (warning), it can send an execution statues request command that requests an execution status of this predetermined command.

Upon reception of the execution status request command from the terminal 1, the smartcard 2 (common unit) sends at least one of a plurality of execution statues to the terminal 1. For example, when the terminal 1 sends an execution status request command which requests execution statuses of all the processes, the smartcard 2 (common unit) sends the execution statuses of all the processes to the terminal 1 in response to reception of this execution status request command. On the other hand, when the terminal 1. sends an execution status request command that requests an execution status of a predetermined command, as described above, the smartcard 2 (common unit) sends the execution status of the predetermined command to the terminal 1 in response to reception of this execution status request, command.

According to the aforementioned first command processing, the terminal 1 can detect command processing statuses in more detail. For example, when Warning processing has occurred in a process in the smartcard, the terminal 1 can detect this Warning processing.

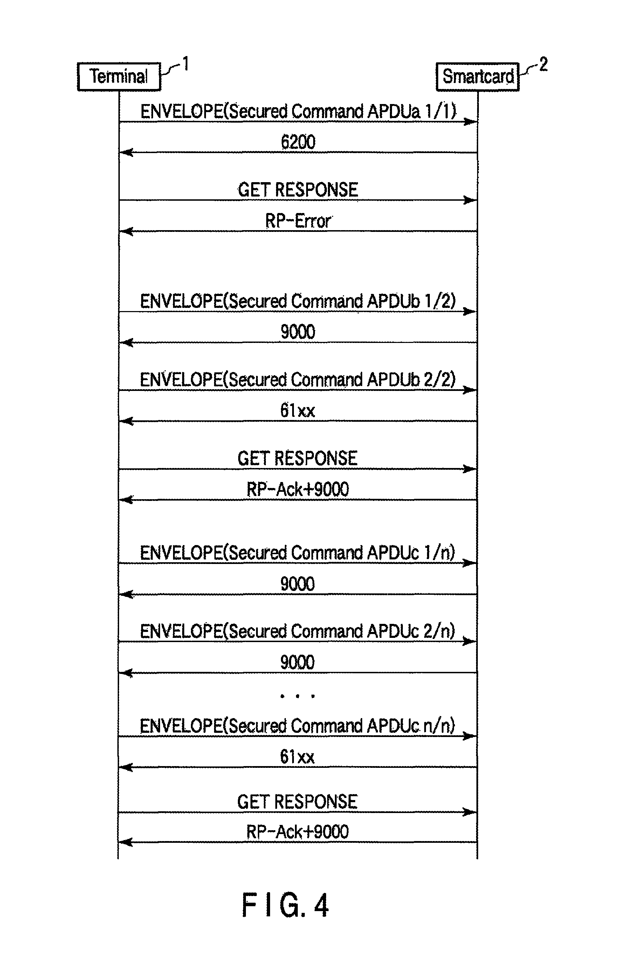

FIG. 4: shows an example of second command processing. In the second command processing to be described below, it is difficult to judge detailed command processing statuses. An example of the second command professing for executing a Secured Command APDU a, Secured Command APDU b, and Secured Command APDU c will be described below.

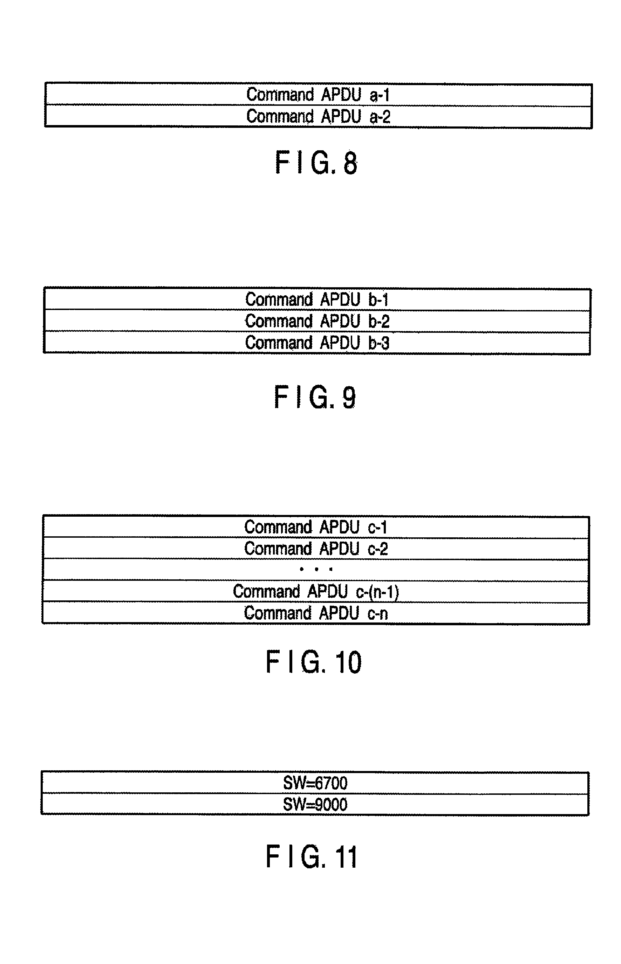

Execution of the Secured Command APDU a will be explained first. As shown in FIG. 8, the Secured Command APDUS a stores a Command APDU a-1 and Command APDU a-2. FIG. 11 shows an example of SWs corresponding to executions of the Command APDU a-1 and Command APDU a-2.

For example, as shown in FIG. 4, the terminal 1 sends a Secured Command APDU a (1/1) to the smartcard 2. The smartcard 2 (common, unit) receives the Secured Command APDU a (1/1), stores the received Secured Command APDU a (1/1) in, for example, the RAM 23, and attempts to instruct the smartcard 2 (application unit) to sequentially execute a plurality of processes corresponding to the Command APDU a-1 and Command APDU a-2_{.}

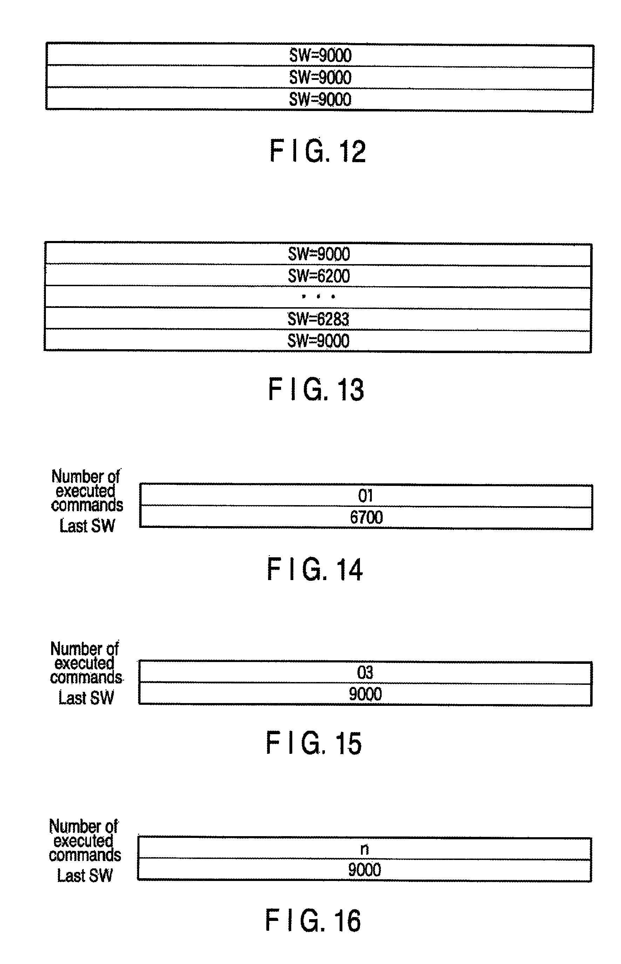

For example, when the application unit executes the Command APDU a-1 and an error has occurred, it notifies the common unit of SW = 6700. The common unit receives SW = 6700 (in response to occurrence of the error) , and sends a response including SW = 6200 indicating the occurrence of the error to the terminal 1 without issuing an execution instruction of the next Command APDU a-2. The terminal 1 receives the response including SW = 6200 from the smartcard 2, and sends GET RESPONSE. The smartcard 2 receives GET RESPONSE, and sends RP-Error including the number of executed commands and last SW. As described above, since the error has occurred at the first command (SW = 6700), the common unit sends RP-Error (see FIG. 14) including the number of executed command: 01 and the last SW: 6700 to the terminal 1.

Subsequently, execution of the Secure Command APDU b will be described below. As shown in FIG. 9, the Secured Command APDU b stores a Command APDU b-1, Command APDU b-2, and Command APDU b-3. FIG. 12 shows an example of SWs corresponding to executions of the Command APDU b-1, Command APDU b-2, and Command APDU b-3.

For example, as shown in FIG. 4, the terminal 1 sends a Secured Command APDU b (1/2) to the smartcard 2. The smartcard 2 (common unit) receives the Secured Command APDU b (1/2), stores the received Secured Command APDU b (1/2) in, for example, the RAM 23, sends a response including SW = 9000 (normal execution) to the terminal 1, and waits for a Secured Command APDU b (2/2). Subsequently, the terminal 1 sends the Secured Command APDUS b (2/2) to the smartcard 2. The smartcard 2 (common unit) receives the Secure Command APDU b (2/2) ,stores the received Secured Command APDU b (2/2) in, for example, the RAM 23, connects the Secured Command APDUS b (1/2) and Secured Command APDUS b (2/2) , and attempts to instruct the smartcard. 2 (application unit) to sequentially execute a plurality of processes corresponding to the Command APDU b-1, Command APDU b-2, and Command. APDU b-3.

For example, when the application unit normally executes a process corresponding to the Command APDU b-1, it notifies the common unit of SW =9000 (normal execution). When the application unit normally executes a process corresponding to the Command APDU b-2, it notifies the common unit of SW = 9000 (normal execution). When the application unit normally executes a process corresponding to the Command APDU b-3, it notifies the common unit of SW = 9000 (normal execution).. The common unit receives these normal execution notifications, and sends a response including SW = 61xx to the terminal 1.

The terminal 1 receives the response including SW = 61xx from the smartcard 2, and sends GET RESPONSE. The smartcard 2 receives GET RESPONSE, and sends RP-Ack including the number of executed commands and last SW. As described above, since all of the plurality of processes are normally executed (that is, the last process is normally executed), the common unit sends RP-Ack+9000 (see FIG. 15) including the number of executed commands: 03 and the last SW: 9000 to the terminal 1.

Subsequently, execution of the. Secured Command APDU c will be described below. As shown in FIG. 10, the Secured Command APDU c stores a Command APDU c-1, Command APDU c-2, ... , Command APDU c-(n-1), and Command APDU c-n. FIG. 13 shows an example of SWs corresponding to executions of the Command APDU c-1, Command APDU c-2, ... , Command APDU c-(n-1),and Command APDU c-n.

For example, as shown in FIG. 4, the terminal 1 sends a Secured Command APDU c (1/n) to the smartcard 2. The smartcard 2 (common unit) receivers the Secured Command APDU c (1/n), stores the received Secured Command APDU c (1/n) in, for example, the RAM 23, sends a response including SW = 9000 (normal execution) to the terminal 1, and waits for a Secured Command APDU c (2/n). Subsequently, the terminal 1 sends the Secured Command APDU c (2/n) to the smartcard 2. The smartcard 2 (common unit) receives the Secured Command APDU c (2/n), stores the received Secured Command APDU c (2/n) in, for example, the RAM 23, sends a response including SW = 9000 (normal execution) to the terminal 1, and waits for a Secured Command APDU c (3/n). In this way, when the smartcard 2 (common unit) receives a Secured Command APDU c (n/n), and stores the received secured Command APDU c (n/n) in, for example, the RAM 23, it connects the Secured Command APDU c (1/n), Secured Command APDU c (2/n), ... , Secured Command APDU c (n/n) , and attempts to instruct the smartcard 2 (application unit) to sequentially execute a plurality of processes corresponding to the Command APDU c-1, Command APDU c-2, ... , Command APDU c-(n-1), and Command APDU c-n.

A case will be described below wherein SWs corresponding to executions of the Command APDU c-1, Command APDU c-2, ..., Command APDU c-(n-1) , and Command APDU c-n in response to this instruction are SW = 9000, 6200, ... , 6283, and 9000, as shown in, for example, FIG. 13.

When the application unit executes the Command APDU c-1 and the execution result of the Command APDU c-1 is SW = 9000 (normal), the common unit which received this execution, results instructs the application unit to execute the Command APDU c-2, and the application unit executes the next Command APDU c-2. When the execution result of the Command APDU c-2 is SW = 6200, the common unit which received this execution result classifies the execution result of the Command APDU c-2 to Warning processing. That is, the common unit classifies the execution result of the Command APDU c-2 not to Process aborted specified by ISO-7816-4 but to Process completed, and does not judge it as an error. Hence, the common unit instructs the application unit to execute the Command APDU c-3, and the application unit executes the next command (Command APDU c-3) in response to this instruction.

When the application unit executes the Command APDU c-(n-1), and the execution result of the Command APDU c-(n-1) is SW = 6283, the common unit which received this execution result also classifies the execution result of the Command APDU c-(n-1) to Warning processing. That is, the common unit does not judge the execution result of the Command APDU c-(n-1) as an error. Hence, the common unit instructs the application unit to execute the Command APDU c-n, and the application unit executes the next command (Command APDU c-n) in response to this instruction.

When the application unit executes the Command APDU c-n, and the execution result of the Command APDU c-n is SW = 9000, the common unit which received this executions result sends a response including SW = 61xx to the terminal 1. The terminal 1 receives the response including SW = 61xx from the smartcard 2, and sends GET RESPONSE. The smartcard 2 receives GET RESPONSE, and sends RP-Ack including the number of executed commands and last SW. As described above, since the plurality of processes are normally executed (that is, the last process is normally executed) , the common unit sends RP-Ack+9000 (see FIG. 16) including the number of executed commands: n and the last SW: 9000 to the terminal 1.

As described above, in the second command processing, although the execution results SW = 6200 and SW = 6283 are obtained in the plurality of processes corresponding t.o the Command APDU c-1, Command APDU c-2, ... , Command APDU c-(n-1), and Command. APDU c-n, the smartcard sends the response indicating normal execution.

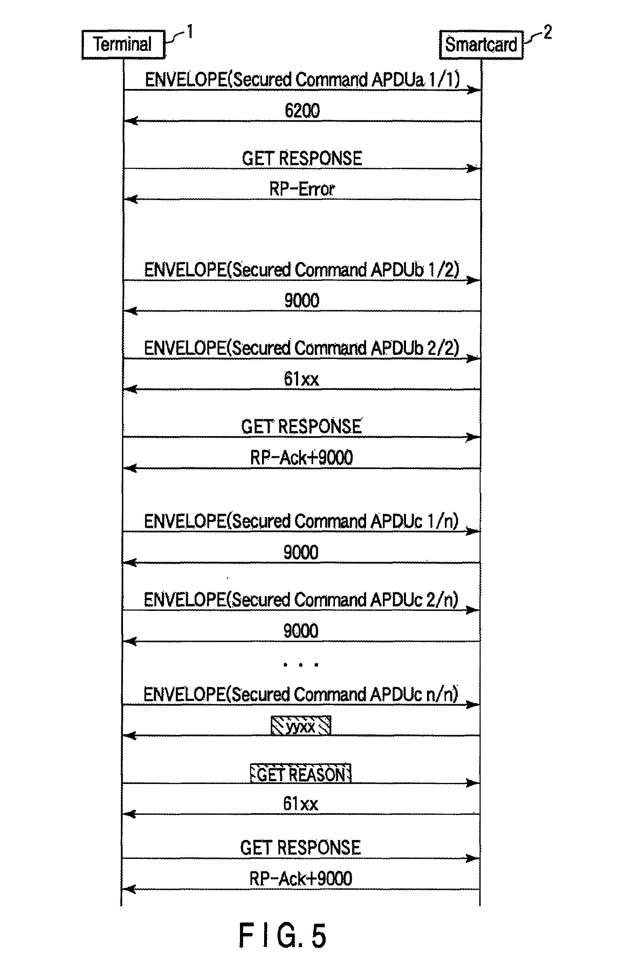

The first command processing will be described again below with reference to FIG. 5.FIG. 5 shows an example of the first command processing. An example of the first command processing for executing a Secured Command APDU a, Secured Command APDU b, and Secured Command APDU c will be described below. Note that a description about, for example, processes common to the second command processing will not be repeated as needed.

For example, the Secured Command APDU a and Secured Command APDU b are executed first. Executi.ons of the Secured Command APDU a and Secured Command APDU b in the second command processing are nearly the same as those of the Secured Command APDU a and. Secured Command APDU b in the first command processing, and a description thereof will not be repeated.

Subsequently, the Secured Command APDU c is executed. For example, as shown in FIG. 5, the terminal 1 sends a Secured Command APDU c (1/n) to the smartcard 2. The smartcard 2 (common unit) receives the Secured Command APDU c (1/n), stores the received Secured Command. APDU c (1/n) in, for example, the RAM 23, sends a response including SW = 9000 (normal execution) to the terminal 1, and waits for a Secured Command APDUS c (2/n). Subsequently, the terminal 1 sends the Secured Command APDU c (2/n) to the smartcard 2. The smartcard 2 (common unit) receives the Secured Command APDU c (2/n), stores the received Secured Command APDU c (2/n) in, for example, the RAM 23, sends a response including SW = 9000 (normal execution) to the terminal 1, and waits for a Secured Command APDU c (3/n). In this way, when the smartcard 2 (common unit) receives a Secured Command APDU c (n/n), and stores the received Secured Command. APDU c. (n/n) in, for example, the RAM 23, it connects the Secured Command APDU c (1/n), Secured Command APDU c (2/n), .... , Secured Command APDU c (n/n), and attempts to instruct the smartcard 2 (application unit) to sequentially execute a plurality of processes corresponding to the Command APDU c-1, Command APDU c-2, ... , Command APDU c-(n-1), and Command APDU c-n,

A case will be described below wherein SWs corresponding to executions of the Command APDU c-1, Command APDU c-2, ... , Command APDU c-(n-1), and Command APDU c-n in response to this instruction are SW = 9000, 6200, ... , 6283, and 9000, as shown in, for example, FIG. 13.

When the application unit executes the Command. APDU c-1 and the execution result of the Command APDU c-1 is SW = 9000 (normal), the common unit which received this execution result storeys the execution result in, for example, the RAM 23 and instructs the application unit to execute the Command APDU c-2, and the application,unit executes the next Command APDU c-2. When the execution result of the Command APDU c-2 is SW = 6200, the common unit which received this execution result stores the execution result in, for example, the RAM 23, and classifies then execution result of the Command APDU c-2 to Warning processing. That is, the common unit classifies the execution result of the Command APDU c-2 not to Process aborted specified by ISO-7816-4 but to Process completed, and does not judge it as an error. Hence, the common unit instructs the application unit to execute the Command APDU c-3, and the application unit executes the next command (Command APDU c-3) in response to this instruction.

When the application unit executes the Command APDU c-(n-1) , and the execution result of the Command APDU c- (n-1) is SW = 6283, the common unit which received this executions result stores the execution result in, for example, the RAM 23, and also classifies the execution result of the Command APDU c-(n-1) to Warning processing. That is, the common unit does not judge the execution result of the Command APDU c-(n-1) as an error. Hence, the common unit instructs the application unit to execute the Command APDU c-n, and the application unit executes the next command (Command APDU c-n) in response to this instruction,

When the application unit executes the Command APDU c-n, and the execution result of the Command APDU c-n is SW = 9000, the common unit which received this execution result storeys then execution result in, for example, the RAM 23. The common unit sends, to the terminal 1, a response including SW = yyxx based on the fact that the execution result corresponding to at least one of the plurality of processes corresponding to the Command. APDU c-1, Command APDU c-2, ... , Command APDU c-(n-1), and Command APDU c-n indicates Warning processing. That is, the common unit sends the response including SW = yyxx to the terminal 1 in response to the fact that Warning processing is included in the execution results of the plurality of processes.

Upon reception of the response including SW = yyxx from the smartcard 2, the terminal 1 sends, for example, an execution status requests command (for example, a GET REASON command) to the smartcard 2. Upon reception of the execution status request command from the terminal 1, the smartcard 2 sends, to the terminal 1, an execution status response including the execution statuses (corresponding to those stored in the RAM 23) of the plurality of processes corresponding to the Command APDU c-1, Command APDU c-2, ... Command APDU c-(n-1), and Command APDU c-n. Alternatively, upon reception of the execution status request command from the terminal 1, the smartcar.d 2 sends, to the terminal 1, an execution status response including the execution status of a process corresponding to a predetermined Command APDU of the Command APDU c-1, Command APDU c-2, ... , Command APDU c-(n-1), and Command APDU c-n. Also, this execution status response can include an SW which prompts to acquire RP-Ack.

Upon reception of the aforementioned execution status response, the terminal 1 further sends a GET RESPONSE command to the smartcard 2. The smartcard 2 sends RP-Ack to the terminal 1 in response to reception of the GET RESPONSE command.

As described above, in the first command processing, when the execution results SW = 6200 (second event) and SW = 6283 (second event) are obtained upon execution of the Command APDUs c, the smartcard 2 notifies the terminal 1 of occurrence of these second events (SW = 61xx). The terminal 1 receives the occurrence notification of the second events from the smartcard 2, and requests at least one of the execution results of the plurality of processes. In response to this request, the smartcard 2 notifies at least one of the execution results of the plurality of processes. For example, when the terminal 1 requests the execution results of all of the plurality of processes, it can acquire the execution results of all of the plurality of processes. That is, the terminal 1 can recognize the execution results of all of the plurality of processes. Also, when the terminal 1 requests the execution result of a predetermined process, it can acquire the execution result of the predetermined process. That is, the terminal 1 can intensively monitor the execution result of the predetermined process.

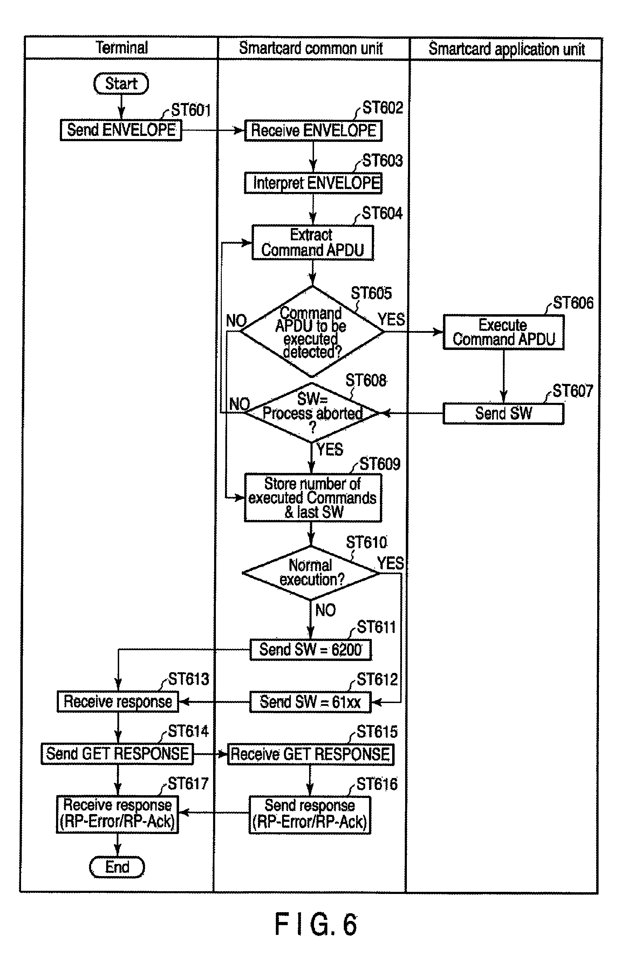

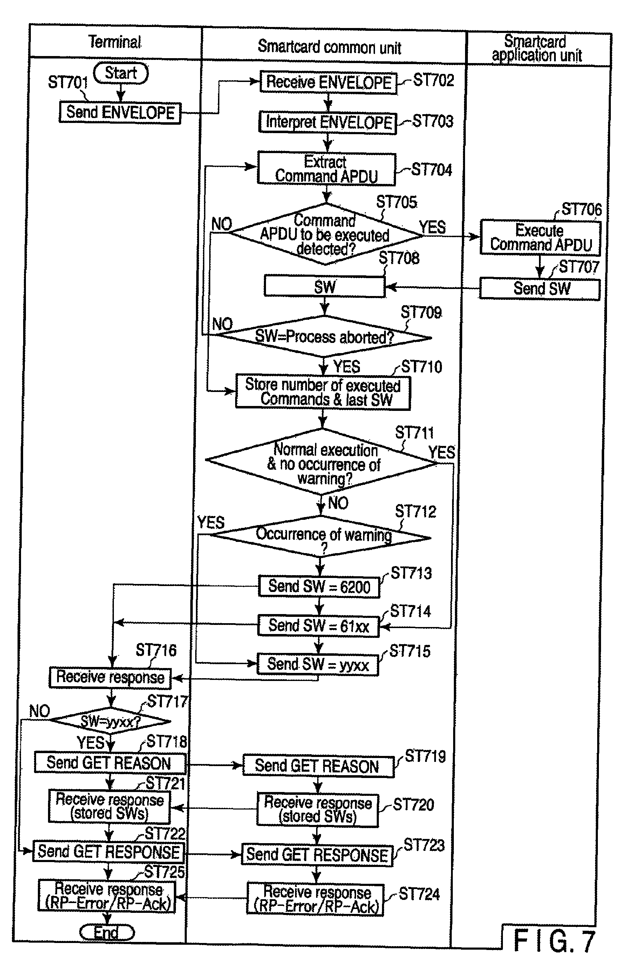

A case will be further described below with reference to the flowcharts shown in FIGS. 6 and 7 wherein a plurality of commands are executed using an ENVELOPE command. FIG. 6 is a flowchart showing an example of a case in which the second command processing is applied to executions of the ENVELOPE command. FIG. 7 is a flowchart showing an example of a case in which the first command processing is applied to execution of the ENVELOPE command..

An example of the second command processing will be described first with reference to FIG. 6.

As shown in FIG. 6, the terminal 1. sends an ENVELOPE command to the smartcard 2 (ST601). The common unit of the smartcard 2 receives the ENVELOPE command (ST602), interprets the ENVELOPE command (ST603), and extract a Command APDU from Secured Data (ST604).

If the common unit of the smartcard 2 detects a Command APDU to be executed (YES in ST605), it passes the Command APDU to be executed to the application unit of the smartcard 2. The application unit executes the passed Command APDU (ST606), and sends an SW as the executions result to the common unit (ST607).

The common unit receives the SW from the application unit, and checks to which of Normal Processing and Process aborted the received SW is classified (ST608). If the application unit classifies the received SW to Process aborted (YES in ST608), the control advances to a process for storing the number of executed Commands and last SW (ST609) without executing the next Command APDU (Command APDU to be executed). If the application unit classifies the received SW to Normal Processing (NO in ST608), the control returns to the extraction process of the next Command APDU (Command APDU to be executed) (ST604).

If the common unit detects a Command APDU to be executed (YES in ST605), it passes the Command APDU to be execute to the application unit, and the application unit executes the passed. Command APDU (ST606) and sends an SW as the execution result to the common unlit (ST607). If the common unit does not detect any Command APDU to be executed, that is, no Command APDU to be executed remains (NO in ST605), the control jumps to the process for storing the number of executed Commands and last SW (ST609)

If the last SW is Process aborted (NO in ST610), that is, if an error has occurred at the time of execution of the Command APDU (NO in ST610), the common unit sends a response including SW = 6200 to the terminal 1 (ST611).

If the last SW is Normal processing (YES in ST610), that is, if the Command APDU is normally executed (YES in ST610), the common unit sends a response including SW = 61xx to the terminal 1 (ST612)

If the terminal 1 receives the response including SW = 6200 or SW = 61xx (ST613), it sends GET RESPONSE to the smartcard 2 (ST614). The smartcard 2 receives GET RESPONSE (ST615), and sends a response (RP-Error/RP-Ack) to the terminal 1 (ST616). The terminal 1 receives the response (RP-Error/RP-Ack) (ST617).

An example of the first command processing will be described below with reference to FIG. 7.

As shown in FIG. 7, the terminal 1 sends an ENVELOPE command to the smartcard 2 (ST701). The common unit of the smartcard 2 receives the ENVELOPE command (ST702), interprets the ENVELOPE command (ST703), and extracts a Command APDU from Secured Data (ST 704).

If the common unit of the smartcard 2 detects a Command APDU t.o be executed (YES in ST705), it passes the Command APDU to be executed to the application unit of the smartcard 2. The application unit executes the passed Command APDU (ST706), and sends an SW as the execution result to the common unit (ST707).

The common unit receives the SW from the application unit, stores the SW in, for example, the RAM 23 (ST708), and checks to which of Normal processing and Process aborted the received SW is classified (ST709). If the application unit classifies the received SW to Process aborted (YES in ST709), the control advances to a process for storing the number of executed Commands and last SW (ST710) without executing the next Command APDU (Command APDU to be executed). If the application unit classifies the received SW to normal Processing (NO .in ST 709), the control returns to the extraction process of the next Command APDU (Command APDU to be executed) (ST704).

If the common unit further detect a Command APDU to be executed(YES in ST705), it passes the Command APDU to be executed to the application unit, and the application unit executes the passed Command APDU (ST706) and sends an SW as the execution result to the common unit (ST707). If the common unit does not detect any Command APDU to be executed, that is, if no Command APDU to be executed remains (NO in ST705), the control jumps to the process for storing the number of executed Commands and last SW (ST710).

If no Process aborted has occurred (Normal processing) and no Warning has occurred in all the processes (YES in ST711), the common unit sends a response including SW = 61xx to the terminal 1 (ST714).

If no Process aborted has occurred (Normal Processing) but Warning has occurred in at least one process (NO in ST711, YES in ST712), the common unit sends a response including SW = yyxx to the terminal 1 (ST715). Note that yy need not indicate other information and need only be compliant with ISO.

If Process aborted has occurred (NO in ST711, NO in ST712), the common unit sends a response including SW = 6200 to the terminal 1. (ST713).

If the terminal 1 receives the response including SW = 6200 or SW = 61xx (ST716, NO in ST717), it sends GET RESPONSE to the smartcard 2 (ST722). The smartcard 2 receives GET RESPONSE (ST723), and sends a response (RP-Error/RP-Ack) to the terminal 1 (ST724). The terminal 1 receives the response (RP-Error/RP-Ack) (ST725).

If the terminal 1 receives the response including SW = yyxx (ST716, YES in ST717), it sends GET REASON to the smartcard 2 (ST718). The smartcard 2 receives GET REASON (ST719), and sends a response (all SWs stored, in the RAM 23) to the terminal 1 (ST720). The terminal 1 receives the response (all SWs stored in the RAM 23) (ST721). Upon reception of the response (all SWs stored in the RAM 23) (ST721), the terminal 1 sends GET RESPONSE to the smartcard 2 (ST722). The smartcard 2 receives GET RESPONSE (ST723), and sends a response (RP-Error/RP-Ack) to the terminal 1 (ST724). The terminal 1 receives the response (RP-Error/RP-Ack) (ST725).

Note that upon reception of the response including SW = yyxx, the terminal 1 can send GET REASON which requests an execution status of a predetermined command to the smartcard 2. The smartcard 2 receives GET REASON that requests the execution status of the predetermined command, and sends a response (an SW which is stored in the RAM 23 and indicates the execution status of the predetermined command) to the terminal 1. Thus, the terminal 1 can receive the execution status of the predetermined command.

As describe above, the first command processing allows the terminal 1 to detect command processing statuses in more detail. For example, when Warning processing has occurred in a process in the smartcard, the terminal 1 can detect this Warning processing.

Next, the aforementioned ENVELOPE, command and the like will be described below.

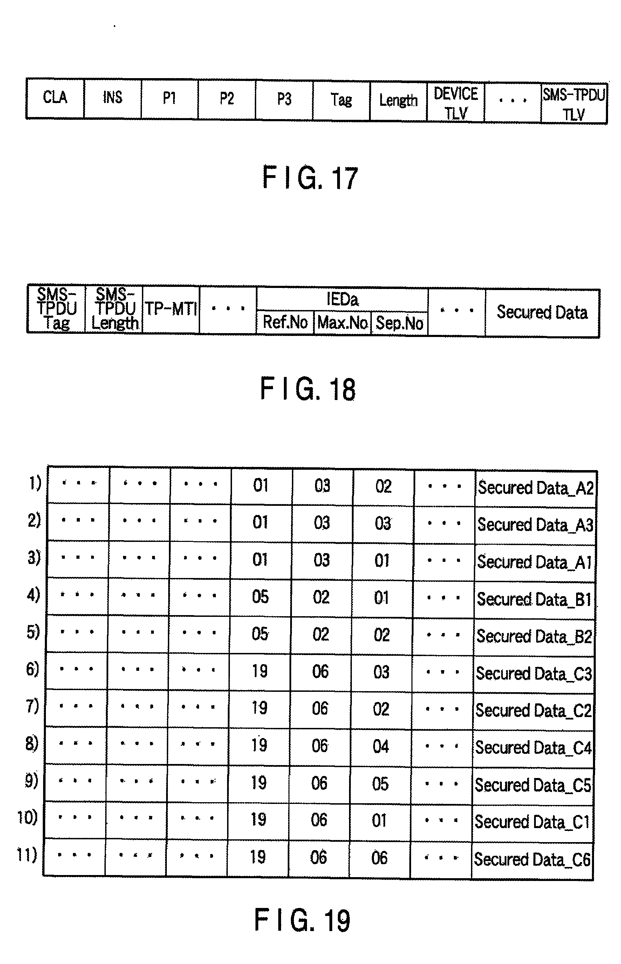

FIG. 17 shows an example of the format of the ENVELOPE command. As shown in FIG. 17, a data field of the ENVELOPE command has a BER-TLV format, and a TLV Value field stores one or a plurality of TLVs. Note that the TLV is a short for "Tag-Length-Value".

FIG. 18 shows an example of the format of an SMS-TPDU TLV. "Ref. No" in "TEDa" shown in FIG. 18 is used to discriminate whether or not a divided SMS (ENVELOPE) belongs to an identical group (Gr). "Max. No" indicates the number of divisions when an SMS is divided. "Seq. No." indicates the number of an SMS of divided SMSs. "Secured Data" stores a Secured Command APDU to be executed by the smartcard 2.

FIG. 19 shows an example of SMS connection. A case will be described below wherein the smartcard 2 receives SMSs in the order shown in FIG. 19.

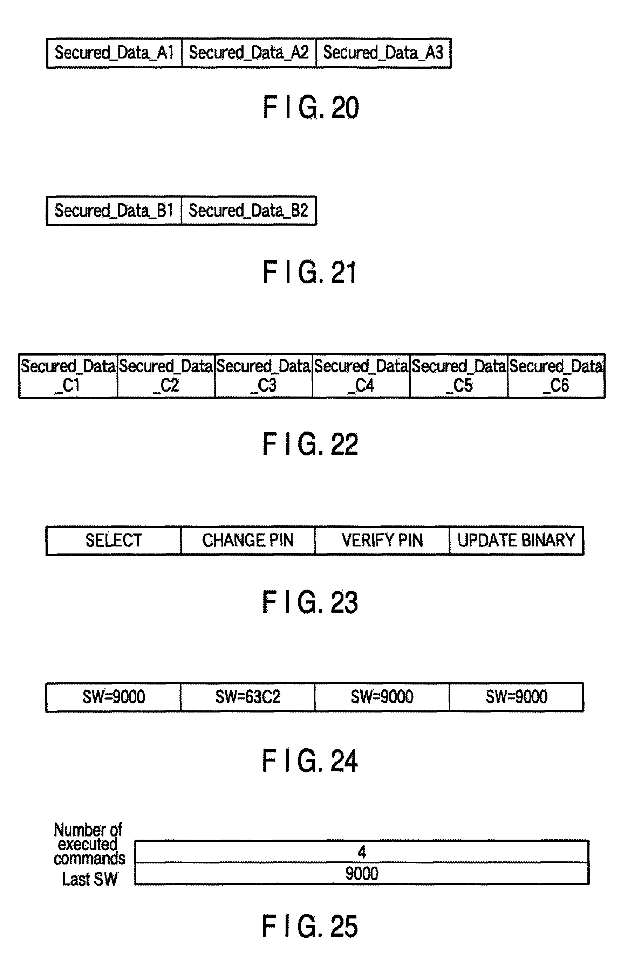

When the smartcard 2 receives SMSs 1), 2), and 3), it connects them to generate Secured_Data_A (see FIG. 20). After that, the smartcard 2 sequentially executes Secured Command APDUs (see FIG. 20) stored in the Secured_Data_A.

Likewise, the smartcard 2 connects SMSs 4) and 5) to generate Secured_Data_B (see FIG. 21), and executes Secured Command APDUs. Also, the smartcard 2 connects SMSs 6) to 11) to generate Secured_Data_C (see FIG. 22), and executes Secured Command APDUs.

FIG. 24 shows an example of execution results of a Secured Command APDU shown in FIG. 23. FIG. 25 shows an example of a response of the smartcard 2 corresponding to an execution of the Secured Command APDU shown in FIG. 23.

The smartcard 2 (application unit) executes a SELECT command as the first command. This command is used to select a file in the card. The application unit normally executes this command, and notifies the common unit of SW = 9000.

Next, the application unit executes a CHANGE PIN command as the second command. This command is used to change a PIN value. Assume that the application unit has failed in collation of PIN values and in rewrite of PIN values. In this case, the application unit notifies the common unit of SW = 63C2. Since SW = 63xx is an SW indicating Warning processing, the common unit instructs to execute the next command without aborting execution of a command.

The application unit executes a VERIFY command as the third command. This command is used to collate PIN values. Assume that the application unit has succeeded in collation of PIN values. In this case, the application unit notifies the common unit of SW = 9000. The common unit instructs to execute the next command.

The application unit finally executes an UPDATE BINARY command. The UPDATE BINARY command is used to rewrite data of a transparent file in the card. Assume that the application unit has succeeded, in write of data of the transparent file. Then, the application unit notifies the common unit of SW = 9000.

When the aforementioned SELECT, CHANGE PIN, VERIFY, and UPDATE BINARY commands are executed based on the first command processing (FIGS. 5 and 7), since the smartcard 2 sends SW = yyxx to the terminal 1, the terminal 1 can detect the occurrence of Warning processing.

When the aforementioned SELECT, CHANGE PIN, VERIFY, and UPDATE BINARY commands are executed based on the second command processing (FIGS. 4 and 6.), since the smartcard 2 does not send SW = yyxx to the terminal 1, it is difficult for the terminal 1 to detect the occurrence of Warning processing. That is, since the smartcard 2 sends only a response including the number of executed commands: 4 and last SW: 9000 to the terminal 1, the terminal 1 determines only normal execution from this response.

As described above, when the second command processing is applied, and the smartcard 2 successively executes a plurality of Command APDUs stored in one Secured Command APDU, it is difficult for the terminal 1 to accurately recognize the execution results of the plurality of Command APDUs.

By contrast, when the first command processing is applied, and when the smartcard 2 successively executes a plurality of Command APDUs stored in one Secured Command APDU, and Warning processing has occurred in the middle of successive command executions, the smartcard 2 can notify the terminal 1 of the occurrence of this Warning processing. Furthermore, in response to reception of the occurrence notification of Warning processing, the terminal 1 can send a dedicated Command APDU to the smartcard 2. Upon reception of the dedicated Command APDU, the smartcard 2 returns SWs corresponding to all the executed Command APDUs to the terminal 1. The terminal 1 receives the SWs corresponding to all the executed Command APDUs, and can accurately recognize the execution results of the plurality of Command APDUs.

According to the aforementioned embodiment., a portable electronic device and command processing method which allow to judge command processing statuses in more detail can be provided. According to the aforementioned embodiment, a communication device which allows to judge command processing statuses in more detail can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic device **characterized by** comprising:
a communication unit (21) configured to exchange data; and
a command processor (22) configured to execute a plurality of processes corresponding to a plurality of commands received by the communication unit, and to send a response according to an execution status,
wherein the command processor controls the communication unit to send a first response in response to normal execution of the plurality of processes,
the command processor controls the communication unit to send a second response in response to occurrence of a first event, for which it is specified that a process is to be aborted upon occurrence thereof, in one process of the plurality of processes, and
the command processor controls the communication unit to send a third response in response to occurrence of a second event, for which it is specified that a process is not to be aborted upon occurrence thereof, in at least one process of the plurality of processes.

2. The device of claim 1, **characterized in that** the command processor sequentially executes the plurality of processes corresponding to the plurality of commands included in one main command, and sends one of the first, second, and third responses in accordance with an execution status.

3. The device of claim 1, **characterized in that** the command processor sequentially executes the plurality of processes corresponding to the plurality of commands included in one main command, and sends an execution status of a last command which is executed last of the plurality of commands.

4. The device of claim 1, **characterized in that** the command processor controls the communication unit to send the second response in response to occurrence of an error, for which it is specified that a process is to be aborted upon occurrence thereof, and controls the communication unit to send the third response in response to occurrence of a warning, for which it is specified that a process is not to be aborted upon occurrence thereof, in at least one process of the plurality of processes.

5. The device of claim 1, **characterized in that** the command processor executes the plurality of processes corresponding to the plurality of commands, and stores a plurality of execution statuses corresponding to executions of the plurality of processes.

6. The device of claim 5, **characterized in that** the command processor sends at least one execution status of the plurality of execution statuses in response to an execution status request command received by the communication unit.

7. The device of claim 1, **characterized in that** the command processor executes the plurality of processes corresponding to the plurality of commands which are received by the communication unit and include a predetermined command, stores a plurality of execution statuses corresponding to executions of the plurality of processes, and sends a predetermined execution status corresponding to the predetermined command in response to an execution status request of the predetermined command received by the communication unit.

8. A communication device **characterized by** comprising:
a communication unit (142) configured to exchange data; and
a command sending unit (143) configured to control the communication unit to send a plurality of commands, to receive a response according to execution statuses of a plurality of processes corresponding to the plurality of commands, and to send an execution status request command that requests an execution status of at least one process of the plurality of processes in accordance with contents of the response.

9. The device of claim 8, **characterized in that** the command sending unit receives one of a first response sent in response to normal execution of the plurality of processes, a second response sent in response to occurrence of a first event, for which it is specified that a process is to be aborted upon occurrence thereof, in one process of the plurality of processes, and a third response sent in response to occurrence of a second event, for which it is specified that a process is not to be aborted upon occurrence thereof, in at least one process of the plurality of processes, and sends the execution status request command when the third response is received.

10. The device of claim 8, caracterized in that the command sending unit sends one main command including the plurality of commands.

11. The device of claim 8, **characterized in that** the command sending unit sends the execution status request command which requests an execution status of a predetermined command included in the plurality of commands.

12. A command processing method **characterized by** comprising:
Receiving (ST702) a plurality of commands; and
executing (ST706) a plurality of processes corresponding to the plurality of commands, sending (ST714) a first response in response to normal execution of the plurality of processes, sending (ST713) a second response in response to occurrence of a first event, for which it is specified that a process is to be aborted upon occurrence thereof, in one process of the plurality of processes, and sending (ST715) a third response in response to occurrence of a second event, for which it is specified that a process is not to be aborted upon occurrence thereof, in at least one process of the plurality of processes.
